# EUROPEAN PATENT APPLICATION

(11) **EP 2 048 633 A2**
(43) Date of publication of application: **15.04.2009**
(21) Application number: 08166139.9
(22) Date of filing: 08.10.2008
(51) Int. Cl.: G07F 11/00

(54) **An apparatus for the automatic dispensing of packages of solid food products**

(30) Priority: 10.10.2007 IT TV20070170
(71) Applicant: Terrani, Giacomo, 27029 Vigevano (PV) (IT)
(72) Inventor: Terrani, Giacomo, I-27029, Vigevano (PV) (IT); Carpanzano, Emanuele, 20131, Milano (IT); Carlino, Giovanni, 20131, Milano (IT); Pagliarni, Gian Pietro, I-24045, Fara Gera D'Adda (BG) (IT); Forni, Andrea, 20131, Milano (IT)
(74) Representative: Zanoli, Enrico

(57) **Abstract**

The present invention refers to a apparatus for automatic dispensing of packages of food products in beans or ground.

The apparatus according to the present invention comprises a control unit comprising at least a user interface and at least a metering unit suitable for automatically metering, according to command signals received from said control unit, a predefined quantity in weight of a food product.

The apparatus, according to the present invention, also comprises a packaging unit suitable for handling at least one package dedicated to containing of said food product, so as to fill said dedicated package with said predefined quantity in weight of food product. Said packaging unit is furthermore suitable for sealing the above-mentioned package thus filled, making it available to the user.

## Description

The present invention refers to an apparatus for the automatic dispensing of packages of solid food products, for example roasted coffee beans or ground coffee.

Today the use of equipment for the automatic dispensing of food is becoming increasingly widespread, particularly in public and commercial areas.

Apparatuses for dispensing drinks which are pre-packed or prepared on the spot as requested by the user are known. Due to the nature of the product supplied, said dispensing apparatuses generally have a relatively high level of automation, such as not to require intervention on the part of the user during the dispensing operation.

Equipment for dispensing solid food products is also known.

Some apparatuses automatically dispense pre-packed solid foods. In general, said apparatuses simply comprise drums for storing the food packages (for example snack or ice-cream packages) and means for automatic collection of the selected packages by the user.

Other dispensing apparatuses of known type are able to supply non pre-packed solid food products, for example coffee beans or ground coffee.

The more traditional apparatuses for dispensing coffee beans or ground coffee have a relatively low level of automation during preparation and packaging of the required product. In these apparatuses, the user is required to insert, in the compartment provided in the apparatus, a container (for example a bag) suitable for containing the selected type of coffee. Once said bag has been filled, the user then has to remove the bag from the above-mentioned compartment and weigh it in order to determine the exact final cost.

The interaction of the apparatus with the end user, different each time, does not ensure a satisfactory level of hygiene, especially as regards the parts exposed to direct contact with the external environment and with the user.

Furthermore, the need to interact directly with the apparatus can be particularly awkward for the user, given that the operations necessary require a certain level of manual skill, which the end user does not always possess, as can be the case with disabled persons.

The patent US6321506 refers to an apparatus able to automatically supply sealed packages containing the type of coffee selected by the user.

Said apparatus has some drawbacks, above all as regards the coffee metering and packaging phases.

The coffee metering system performs measurements basically of the volumetric type, which are in themselves relatively rudimentary and not particularly accurate. This can involve the frequent occurrence of metering errors, with the possibility of waste or of supplying to the user packages containing an unsatisfactory quantity of coffee.

The packaging system uses a continuous strip of bags, which require preliminary sealing on one side before they can be used as containers for the coffee.

Said packaging system is relatively complex and difficult to implement in practice since it involves a relatively problematic handling of the bags. This can frequently cause malfunctions and/or require servicing of the apparatus.

The main aim of the present invention is to provide an apparatus for automatic dispensing of packages of solid food products which overcomes the drawbacks illustrated above.

In this context, one object of the present invention is to provide an apparatus that does not require intervention by the user during preparation and packaging of the required food product.

A further object of the present invention is to provide an apparatus which has a high level of dependability, is easy to install and easy to use.

A further object of the present invention is to provide an apparatus that has a relatively simple structure and is relatively easy to produce on an industrial scale, at competitive prices.

This aim and these objects, in addition to further objects which will become evident from the subsequent description and the accompanying drawings, are achieved, according to the invention, by an apparatus for automatic dispensing of packages of solid food products, as specified in the attached claim 1.

As will be seen below, the apparatus according to the present invention involves the user only during selection of the required product and withdrawal of the packaged product.

This ensures a high level of overall hygiene, since the food product never comes into contact with the external environment before the final packaging.

The apparatus according to the present invention has a relatively simple, modular, sturdy and dependable structure, able to ensure optimal performance in the long term, minimising the need for servicing.

Further characteristics and advantages of the present invention will be better understood by referring to the description below and the accompanying figures, provided purely for illustrative non-limiting purposes, in which:

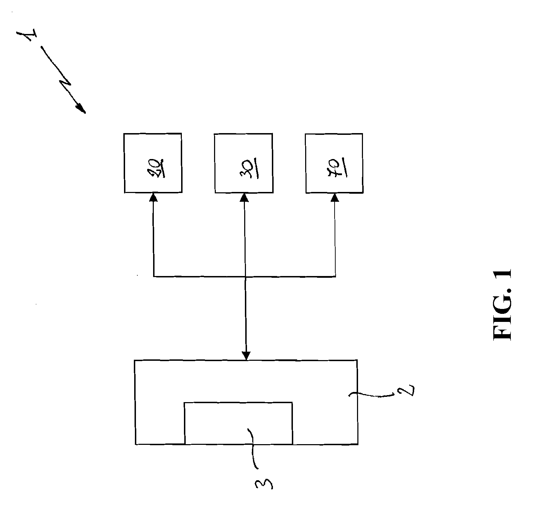

- figure 1 schematically illustrates a block diagram which shows the structure of an embodiment of the apparatus, according to the present invention; and
- figure 2 schematically illustrates a perspective view of a portion of an embodiment of the apparatus, according to the present invention; and
- figure 3 schematically illustrates a perspective view in section of a portion of the apparatus of figure 2; and
- figure 4 schematically illustrates a perspective view of another portion of the apparatus of figure 2; and
- figure 5 schematically illustrates a perspective view of a further portion of the apparatus of figure 2; and
- figure 6 schematically illustrates a perspective view of a further portion of the apparatus of figure 2; and
- figure 7 schematically illustrates a perspective view of a further portion of the apparatus of figure 2; and
- figure 8 schematically illustrates a perspective view of a further portion of the apparatus of figure 2; and
- figure 9 schematically illustrates a perspective view of a further portion of the apparatus of figure 2; and
- figure 10 schematically illustrates a perspective view of a further portion of the apparatus of figure 2.

With reference to the cited figures, the present invention refers to a apparatus 1 for automatic dispensing of solid food products.

The apparatus 1, according to the present invention, will now be described with specific reference to use for the dispensing of roasted coffee beans or ground coffee, without wishing to limit in any way the scope of the present invention.

It is therefore understood that the apparatus 1, according to the present invention, can also be used for automatic dispensing of packages of other types of food products.

The apparatus 1 preferably comprises a casing (not illustrated) and a control unit 2, which can comprise one or more dedicated electronic boards, of the PLC type for example.

The control unit 2 generates command and control signals suitable for regulating the operation of the electromechanical and electro-pneumatic devices of the apparatus 1, in particular of the devices which will be described in greater detail below, and for performing other ancillary type functions. ù

The control unit 2 can obviously receive in input command or detection signals coming, for example, from peripheral devices, user interfaces or sensor means.

The control unit 2 comprises at least an user interface 3 advantageously positioned at the level of a wall of the casing which can be accessed by the user.

The interface 3 preferably comprises a plurality of keys for selecting the type of food product required and/or the preparation thereof. For example, the user can select the preferred type of coffee (for example sweet, creamy, etc.) and the desired mode of preparation (for example in beans, ground-mocha, ground-espresso, etc.).

Preferably, the interface 3 also comprises a display for showing user information.

The apparatus 1 comprises at least one metering unit 20 suitable for automatically weighing out, on the basis of command signals received from the control unit 2, a pre-set quantity of coffee beans (for example 250 g).

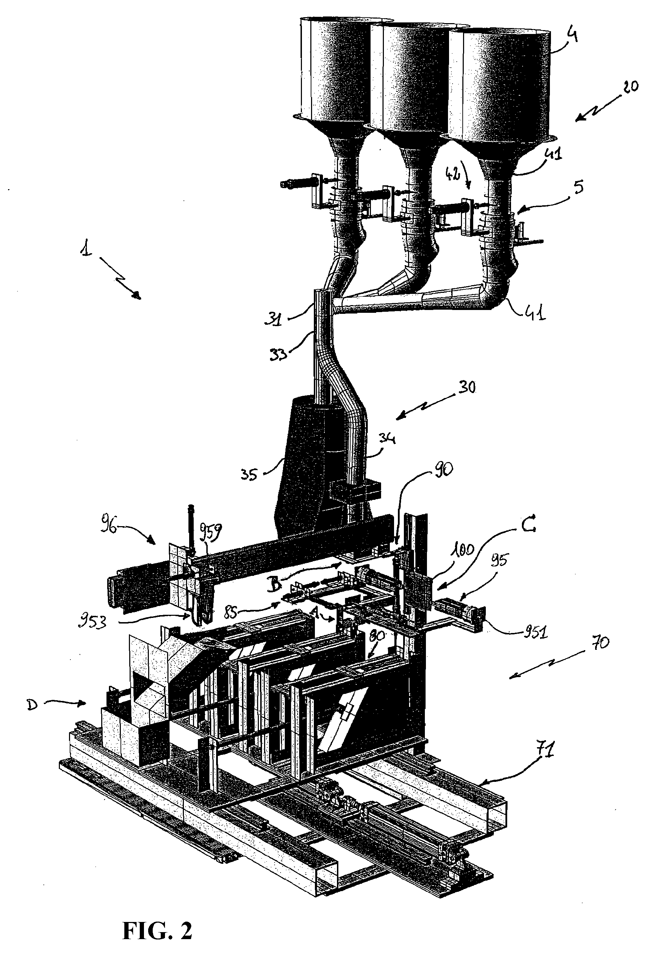

A metering unit 20 comprises at least one reservoir 4 for storage of the coffee beans and at least one weighing device 5 (figures 2-3).

It should be noted that, in order to avoid mixing different types of coffee, it is preferable to provide a metering unit 20 for each type of coffee offered to the end user.

For the same reason, in each metering unit 20 it is preferable to provide one single reservoir 4 pertaining to one single weighing device 5.

The reservoir 4 preferably consists of a free-standing container, so as to facilitate the replacement or filling thereof. A manifold 41, comprising one or more ducts, is provided at the bottom of the reservoir 4 so as to permit free downward flow of the coffee beans (arrow 42).

Preferably the weighing device 5, operating associated to the manifold 41, comprises a removable closing plate 51, which can be actuated by using actuator means 52 comprising, for example, a hydraulic piston.

The actuator means 52 are arranged so that the plate 51 can be moved backwards and forwards (arrow 53) according to a substantially transverse plane with respect to the manifold 41.

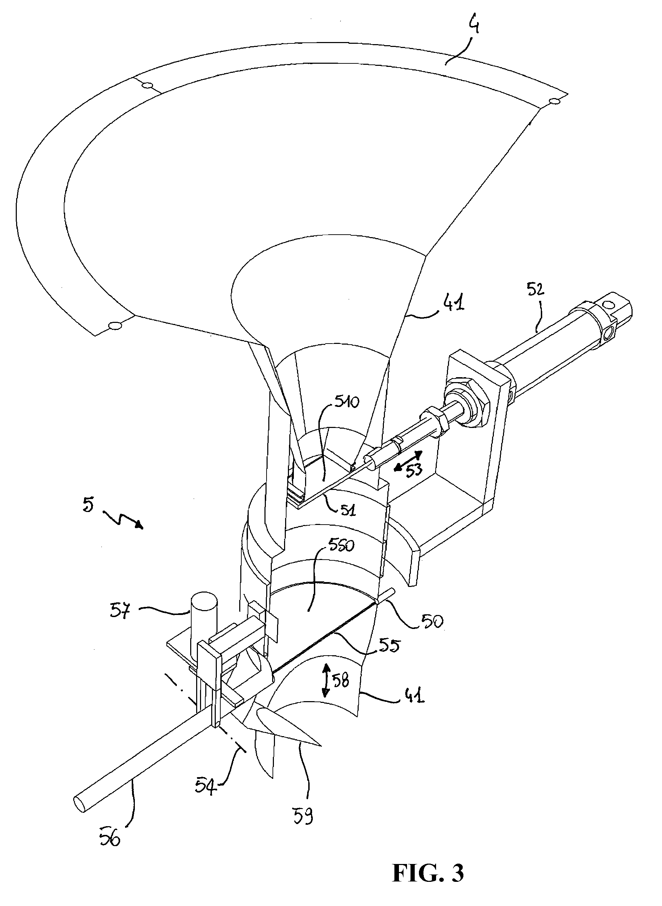

Thanks to the actuator means 52, the plate 51 can set to a rest position (figure 3), in which the manifold 41 is obstructed and the free flow of the coffee is prevented, and an opening position (not illustrated), in which the section of the manifold 41 is free, thus allowing the coffee to drop down freely.

Advantageously, the device 5 also comprises a removable weighing plate 55, which can be rotated with respect to an axis of rotation 54.

In its rest position, the plate 55 is positioned transversely with respect to the manifold 41, so as to prevent the flow of coffee downstream.

The plate 55 is operatively associated with a predefined counterweight 56 positioned opposite the axis 54.

It should be noted that the assembly formed by the counterweight 56 and the plate 55 constitutes a first-class lever having the axis of rotation 54 as its fulcrum.

Second actuator means 57, preferably comprising a hydraulic piston, are operatively associated to the plate 55. The actuator means 57 are suitable for reversibly-rotating the plate 55 downwards (arrow 58) to a supporting wall 59, so that the plate 55 sets to an opening position such as not to further obstruct the manifold 41.

The weighing device 5 also comprises sensor means 50 for detecting the movement of the plate 55 from its rest position.

The operation of collecting and weighing of a pre-set quantity of coffee will now be described in greater detail.

Once the user has selected the type of coffee required by means of the user interface 3, the control unit 2 activates the weighing device 5 of the metering unit 20, which comprises the reservoir 4 containing the selected type of coffee.

The actuator means 52 move the closing plate 51 from the rest position (figure 3) to the relative opening position (not illustrated).

The coffee coming from the reservoir 4, which normally accumulates on the upper surface 510 of the closing plate 51, can therefore flow freely through the manifold 41, accumulating on the upper surface 550 of the weighing plate 55.

Due to the counterweight 56, the plate 55 remains initially in its rest position (figure 3). As soon as the weight of the coffee accumulated on the plate 55 exceeds that of the counterweight 56, the plate 55 begins to move from the above-mentioned rest position. Said movement is detected by the sensor means 50, which send appropriate detection signals to the control unit 2.

The control unit 2 activates the actuator means 52, which re-set the closing plate 51 to its rest position, thus preventing the further flow of coffee towards the weighing plate 55.

The control unit 2 also activates the actuator means 57 which rotate the weighing plate downwards, as far as the above-mentioned opening position, at which the plate 55 rests on the supporting surface 59.

Due to the movement of the weighing plate 55, the quantity of coffee that has accumulated on the weighing plate 55 is free to flow downstream of the weighing device 5, through the manifold 41.

It should be noted that in the opening phase of the plate 55, the actuator means 57 counter the action of the counterweight 56, which would tend to immediately re-set the weighing plate 55 towards its rest position, given that the weight of the coffee on the plate 55 is reduced progressively as it is discharged downstream.

After a pre-set wait time (around 3s), so that discharge of the coffee from the plate 55 can be completed, the actuator means 57 re-set the plate 55 to the rest position.

At this point, the unit 20 is ready for another collecting and weighing cycle.

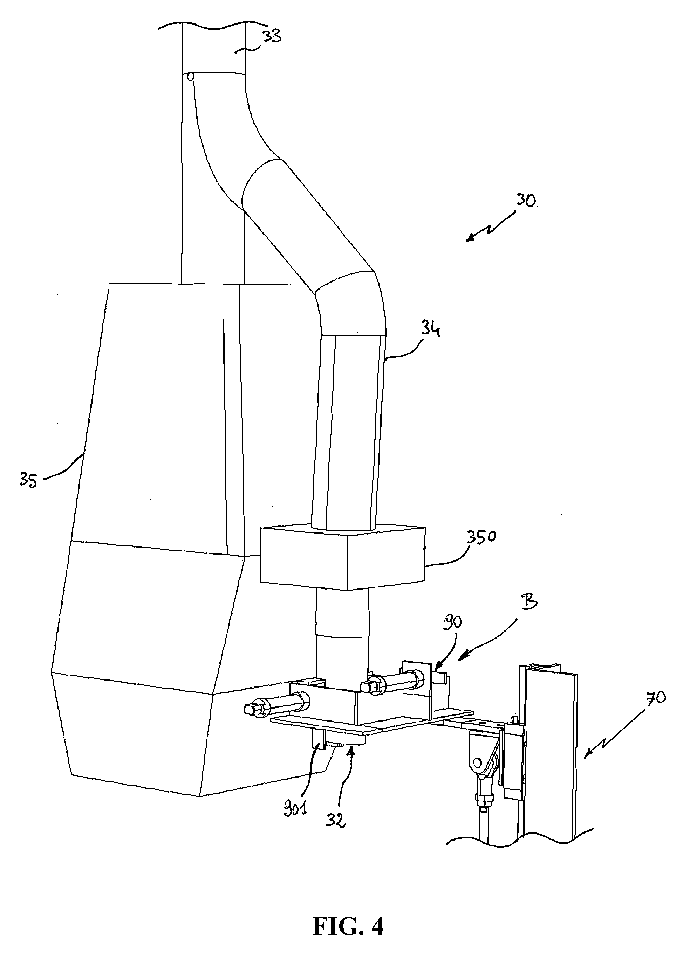

Downstream of the metering units 20, the apparatus 1 preferably comprises a processing unit 30 (figures 2 and 4) comprising an inlet manifold 31, connected to the manifolds 41 of the units 20, and an outlet manifold 32, at the level of which the processing unit 30 is operatively associated to a packaging unit 70, which will be described in further detail below.

At the inlet manifold 31, the processing unit 30 comprises a diverter 33, controlled by the control unit 2.

The diverter 33 is operatively connected to at least one deviation duct 34, which connects the diverter 33 directly to the outlet manifold 32.

The diverter 33 is also operatively connected to at least one grinding device 35, in turn communicating with the outlet manifold 32.

The device 35 performs, if necessary, grinding of the coffee coming from the metering units 20. For said purpose, the grinding device 35 advantageously comprises actuator means 350, which are controlled by the control unit 2 and which are suitable for regulating operation of the grinders of the device 35, according to the indications provided by the user via the interface 3.

Operation of the processing unit 30 is very simple.

If the user selects coffee beans, the control unit 2 sends a command to the diverter 33 so that the coffee, coming from the metering unit 20 and arriving at the inlet manifold 31, is sent directly to the outlet manifold 32 via the deviation duct 34.

If the user selects ground coffee, the diverter 33 is configured to convey the coffee towards the grinding device 35. According to the selection made by the user, the actuator means 350 set the grinders of the device 35 to perform the type of grinding required by the user. The ground coffee is then sent by the device 35 to the outlet manifold 32.

As mentioned above, the apparatus 1 comprises a packaging unit 70 suitable for handling at least one predefined dedicated package 100, for example a bag, and filling it with the pre-set quantity of coffee, ground or in beans, coming out of the manifold 32 of the processing unit 30.

Advantageously the packaging unit 70 is also suitable for closing the package 100, thus filled, sealing it and making it available to the user.

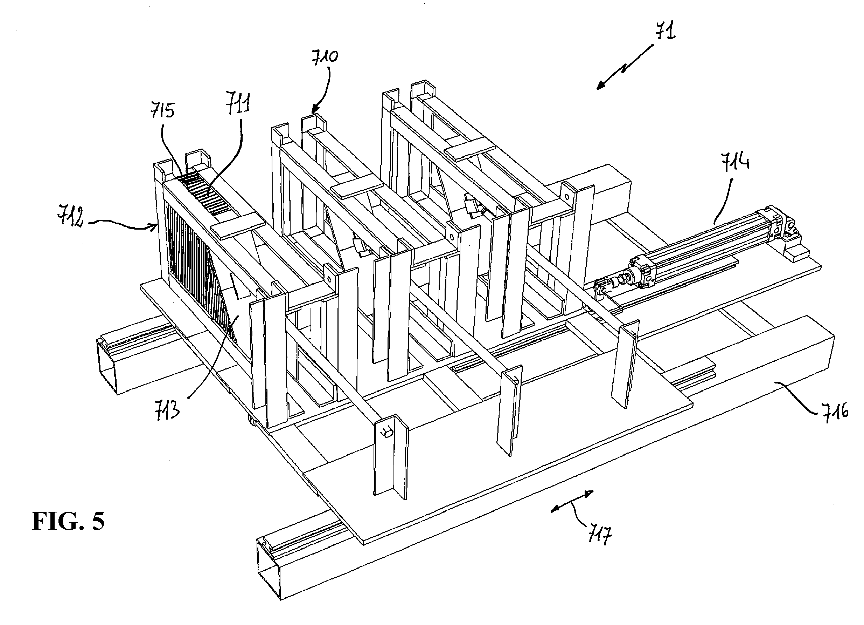

Preferably, the packaging unit 70 comprises at least a package storing-device 71 (figures 2 and 5) comprising at least a removable containing structure 712, suitable for storing a plurality of packages 100.

The structure 712 preferably comprises a plurality of compartments 710, each of which can contain a pile 711 of packages 100, kept in position by a retaining bar 713.

The piles 711 preferably comprise packages that are identical as regards form and capacity but differentiated according to the type of coffee with which they are filled, their external appearance and/or the information provided.

The device 71 advantageously comprises dedicated actuator means 714 comprising, for example, a plurality of aligned pistons suitable for moving (arrow 717), according to the commands coming from the control unit 2, the containing structure 712 on appropriate guides 716, anchored to the casing of the apparatus 1.

Preferably, during operation of the package-storing device 71, the actuator means 714 move the structure 712 so as to position one of the piles 711 in a predefined package-picking position (not illustrated), located roughly at the level of the vertical from the outlet manifold 32.

The device 71 is advantageously operated according to the selection made by the user via the interface 3. The pile 711, which stores the packages 100 for containing the type of coffee selected by the user, is therefore in the mentioned package-withdrawal position. In this way, a package 100 is used which, in terms of external appearance and/or information contained, corresponds to the type of coffee selected by the user.

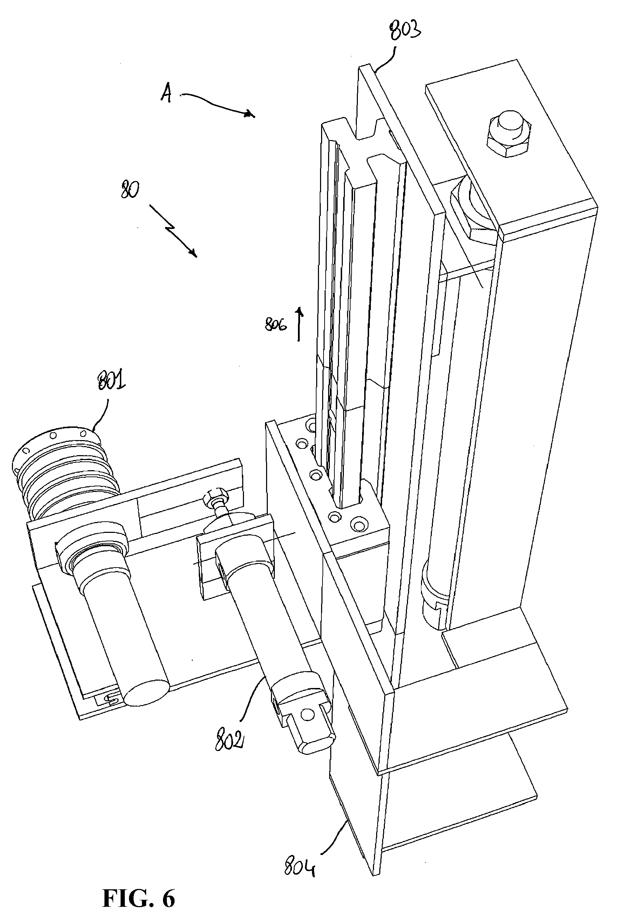

The packaging unit 70 advantageously also comprises a first package-gripping device 80 (figures 2 and 6), operatively associated to the containing structure 712, at the level of the above-mentioned package-picking position.

The package-gripping device 80 comprises first gripping means 801 suitable for picking up a package 100 from the containing structure 712. Preferably, the gripping means 801 comprise a suction cup supplied by a vacuum pump (not illustrated). Actuator means 802, comprising for example a pneumatic piston, are operatively connected to the suction cup 802 to move it vertically along a guide 803 anchored to a supporting structure 804 which is fixed to the casing of the apparatus 1.

Following positioning of one of the piles 711, the suction cup 801 moves closer to the free lateral surface of the package 100, positioned at the nearest end 715 (figure 5) of the pile 711, and adheres to it. Thanks to the actuator means 802, the suction cup 801 moves upwards (arrow 806) raising the package 100 as far as a first predefined work area "A", from where the package 100 will be taken by further handling devices.

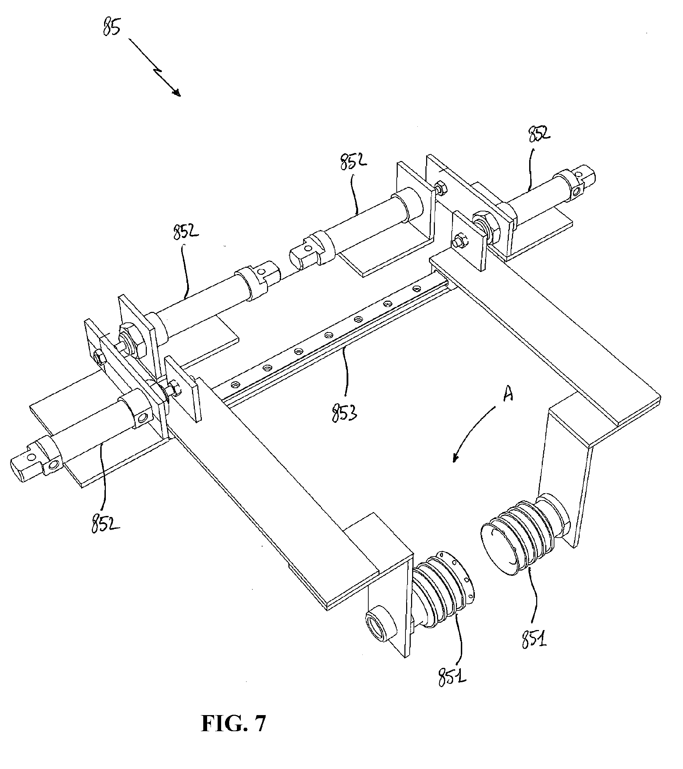

The packaging unit 70 advantageously also comprises a second package-gripping device 85 (figures 2 and 7), which can operate in conjunction with the device 80, at the level of the above-mentioned work area "A".

The device 85 comprises second gripping means 851 suitable for separating from each other the edges of the package 100, raised by the device 80.

The second gripping means comprise two suction cups, positioned opposite each other and supplied by a vacuum pump (not illustrated).

Actuator means 852, comprising a pair of pneumatic pistons, operate in conjunction with the suction cups 851 in order to move them along a guide 853 anchored to the casing of the apparatus 1.

Once the package 100 has been conveyed to the work area "A" by the device 80, the suction cups 851 move closer to the lateral surfaces of the bag 100, adhering to it.

At this point, the actuator means 852 move the suction cups 851 away from each other. Said movement of the suction cups 851 separates the lateral edges of the package 100, causing said package to open.

The package 100 is now ready to be operatively associated to the outlet manifold 32, in order to be filled with the coffee coming out of the processing unit 30.

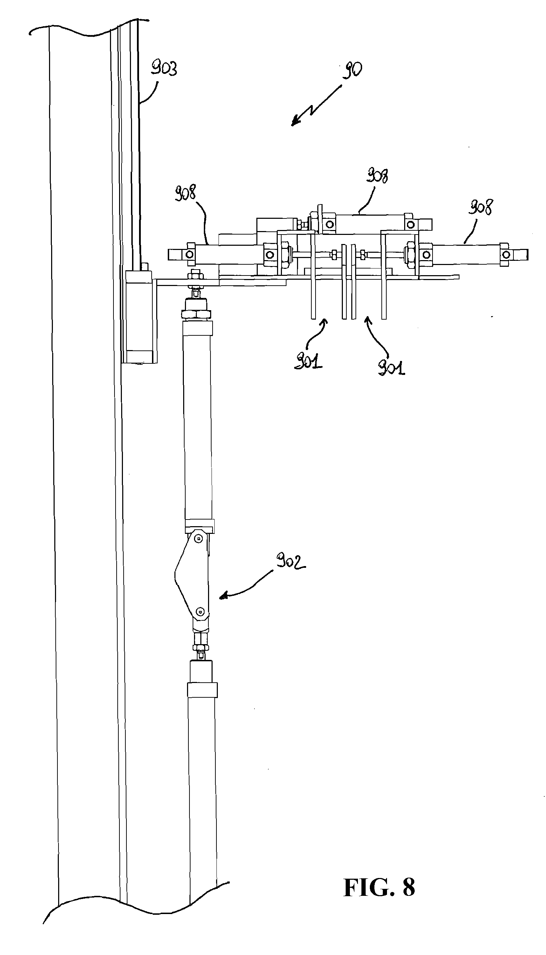

For said purpose, the packaging unit 70 preferably comprises a further third package-gripping device 90 (figures 2, 4, 8 and 10), which can operate in conjunction with the second package-gripping device 85 at the level of the work area "A".

Advantageously, the third package-gripping device 90 comprises third gripping means 901, preferably consisting of a double gripper 901 operated by actuator means 908.

In the work area "A", the grippers 901 grip the lateral edges of the package 100 at the top, keeping them separate from each other. Via further actuator means 902, the grippers 901 move along a removable vertical guide 903, reaching a second work area "B" at the level of the outlet manifold 32 of the processing unit 30.

The package 100 can now be filled with the coffee coming out of the above-mentioned manifold 32.

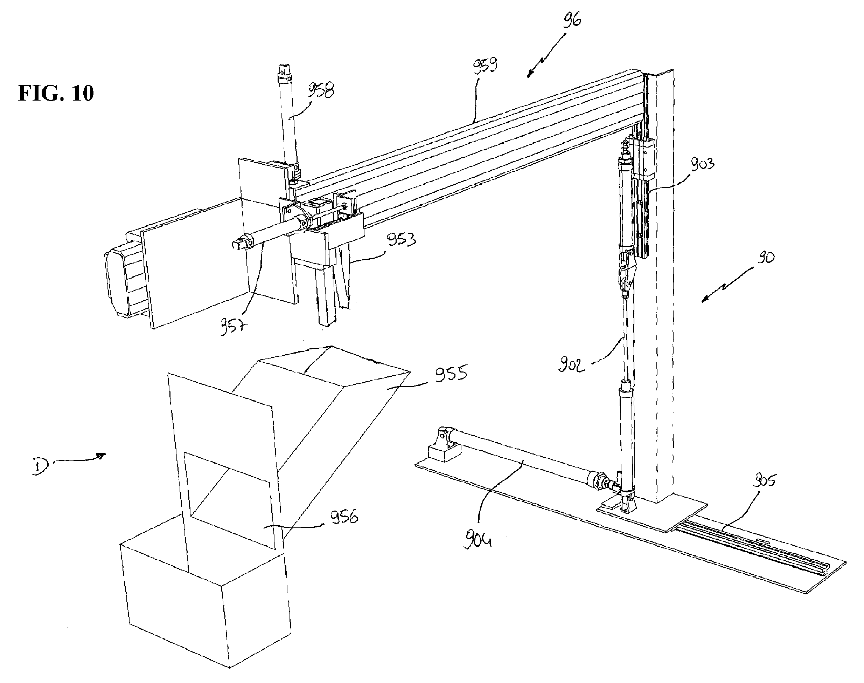

Once said filling phase has been completed, via appropriate actuator means 904 (figure 10) the assembly consisting of the vertical guide 903 and the grippers 901 moves horizontally along a guide 905. The package 100, filled with coffee, is then conveyed by the grippers 901 to a work area "C", where the package 100 will be closed.

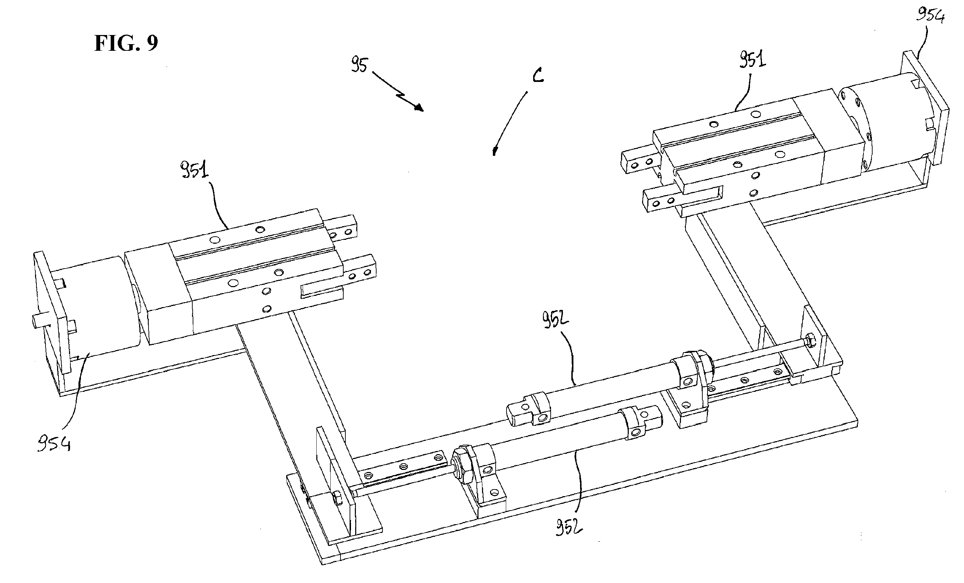

To close the package 100, the packaging unit 70 comprises a package-closing device 95 (figures 2 and 9) comprising fourth gripping means 951, advantageously comprising a double rotating gripper. The rotating grippers 951 can translate along guides 961, anchored to the casing of the apparatus 1, due to the action of actuator means 952. The grippers 951 are operated by further actuator means 954.

Once it has reached the work area C, the package 100 is gripped laterally at two opposite points by the grippers 951. At this point, the package 100 is released by the grippers 901 of the device 90. The grippers 951 clamp between them the lateral edges of the package 100, folding them over by means of a rotation of approximately 90°.

For final sealing of the package 100, the packaging unit 70 comprises a package-release device 96 (figures 2 and 10) which comprises punching means 953, for example a stapler, operated and moved by actuator means 957 and 958 respectively. The stapler 953 can translate along a guide 959 until it reaches the work area "C" and is positioned centrally with respect to the upper end of the package folded by the device 95. In this way, the stapler 953 can punch the package 100 in the area where the lateral edges are folded.

At this point the package 100, now sealed, is released by the double gripper 951 of the device 95 and remains anchored to the stapler 953 which is kept closed. In said state, the stapler 953 moves along the guide 959, conveying the package 100 towards a frontal area "D" of the apparatus 1, where the end product is collected by the user.

Once it has reached its destination, the stapler 953 releases the sealed package 100 into a chute 955 which allows it to fall by gravity towards a port 956 on the front of the apparatus 1. In this way, the user can withdraw the sealed package 100, containing the above-mentioned predefined quantity of ground coffee or coffee beans of the selected type.

It has been proven in practice that the apparatus 1, according to the present invention, allows to achieve the set objectives.

The apparatus 1 has a high level of automation, as a result of which the user is required to intervene only during selection of the required product and during collection of a sealed package containing the same.

The apparatus 1 is therefore extremely simple to use, since the user only has to activate the interface 3, according to his/her requirements, and collect the packaged product.

The considerable level of automation of the apparatus 1 also ensures a high level of overall hygiene, given that the food products are never in contact with the external environment during the apparatus operating cycle.

The overall hygiene of the apparatus can be further increased by providing an automatic dust suction system (not illustrated), appropriately programmed to intervene at the end of each operating cycle.

Due to the use of the weighing devices 5, the selected food product can be metered rapidly and accurately, avoiding unnecessary waste and, at the same time, supplying to the user the expected quantity in weight of the selected product.

The multi-element structure of the packaging unit 70 permits the correct handling of prearranged packages dedicated to containing the selected product, ensuring a considerable level of dependability of the apparatus operating cycle.

The apparatus 1 has a very modular structure as a whole, which means that the apparatus operating cycle can be configured with a high level of flexibility in order to satisfy end user requirements as far as possible, without increasing the apparatus running costs.

Moreover, the modular structure of the apparatus 1 allows minimisation and/or facilitation of any servicing operations, with relative reduction in apparatus down times.

Lastly, the structural modularity of the apparatus 1 permits easy and rapid sizing during design and/or definition of the operating specifications, according to any type of requirement, permitting easy and inexpensive industrial production of the apparatus.

The apparatus 1, according to the present invention, has been described with reference to a preferred embodiment, illustrated in the figures cited. Obviously the apparatus 1 can be subject to variations and modifications, all falling within the scope of the present invention.

For example the reservoir 4 could be filled with ready-ground food products. This could simplify operation of the processing unit 30. Again, the drums 4 could be replaced by one single containing structure with several compartments.

In a further alternative embodiment, several metering units 20 could share one single weighing device 5 connected to several manifolds 41.

## Claims

1. An apparatus (1) for the automatic dispensing of packages (100) of solid food products **characterised in that** it comprises:
- a control unit (2), comprising at least a user interface (3); and
- at least a metering unit (20), which automatically weighs out a pre-set quantity in weight of a food product, according to command signals received from said control unit; and/or
- at least a packaging unit (70), which handles at least a package dedicated to containing of said food product, fills said package with said pre-set quantity in weight of food product, and makes available to the user said package containing said pre-set quantity in weight of food product.

2. Apparatus, as claimed in claim 1, **characterised in that** said metering unit comprises at least a reservoir (4) for storage of said food product and at least one weighing device (5).

3. Apparatus, as claimed in claim 2, **characterised in that** said weighing device comprises:
- a removable closing plate (51) and first actuator means (52), operatively associated to said closing plate; and
- a removable weighing plate (55), positioned downstream of said closing plate; and
- a predefined counterweight (56 operatively associated to said weighing plate so as to constitute, together with said weighing plate, a first-class lever; and
- sensor means (50), suitable for detecting a movement of said weighing plate from its rest position.

4. Apparatus, as claimed in claim 3, **characterised in that** said weighing device comprises second actuator means (57) operatively associated to said weighing plate.

5. Apparatus, as claimed in one or more of the preceding claims, **characterised in that** it comprises a processing unit (30) for said predefined quantity in weight of food product, said processing unit comprising at least one grinding device (35).

6. Apparatus, as claimed in one or more of the preceding claims, **characterised in that** said packaging unit comprises a package-storing device (71) comprising at least one removable containing structure (712) that stores a plurality of packages dedicated to containing of said predefined quantity in weight of food product.

7. Apparatus, as claimed in claim 6, **characterised in that** said packaging unit comprises a first package-gripping device (80) operatively associated to the containing structure of said dedicated package unit, said first package-gripping device comprising first gripping means (801) that pick-up a package from said containing structure and raise said package up to a first predefined work area (A).

8. Apparatus, as claimed in claim 7, **characterised in that** said packaging unit comprises a second package-gripping device (85), which comprises second gripping means (851) that separate the lateral edges of the package raised by said first package-gripping device.

9. Apparatus, as claimed in claim 8, **characterised in that** said packaging unit comprises a third package-gripping device (90), which comprises third gripping means (901) that collect the package raised by said first package-gripping device and raise said package up to a second predefined work area (B) in order to perform filling thereof with said predefined quantity in weight of food product.

10. Apparatus, as claimed in claim 9, **characterised in that** said third gripping means convey said package, filled with said predefined quantity in weight of food product, to a third predefined work area (C).

11. Apparatus, as claimed in claim 10, **characterised in that** said packaging unit comprises a package-closing device (95) comprising fourth gripping means (951) that close and fold the lateral edges of the package conveyed by said third package-gripping device.

12. Apparatus, as claimed in claim 11, **characterised in that** said packaging unit comprises a release device (96), which comprises punching means (953) that seal the package handled by said package-closing device and convey the package thus sealed towards a release area (D), which can be accessed by the user.

13. Apparatus, as claimed in one or more of the preceding claims, **characterised in that** it is a machine for the dispensing of roasted coffee beans or ground coffee.
